# EUROPEAN PATENT APPLICATION

(11) **EP 4 683 340 A1**
(43) Date of publication of application: **21.01.2026**
(21) Application number: 25152111.8
(22) Date of filing: 15.01.2025
(51) Int. Cl.: H04N 23/667, H04N 23/63, H04N 1/00

(54) **METHOD AND DEVICE FOR PHOTOGRAPHING IMAGE, ELECTRONIC DEVICE AND STORAGE MEDIUM**

(30) Priority: 17.07.2024 CN 202410962618; 17.07.2024 CN 202421698950 U
(71) Applicant: Beijing Xiaomi Mobile Software Co., Ltd., Beijing 100085 (CN)
(72) Inventor: PENG, Cong, Beijing, 100085 (CN)
(74) Representative: Dehns Germany Partnerschaft mbB

(57) **Abstract**

The present invention relates to a photographing method and device, an electronic device and a storage medium. The photographing method includes: in a case where a terminal (201) is in a connected state with a printing device (A) and a camera (202) application of the terminal is launched, displaying a first interface (204) in a first shooting mode, wherein the first interface includes a viewfinder area and a control area, the viewfinder area is configured to display a preview image, the control area is configured to display a first shooting mode control identifying the first shooting mode, and the first shooting mode is active in the connected state; in response to acquiring a photographing instruction, photographing an object to be photographed in the preview image to obtain a photographed image; and sending the photographed image to the printing device, wherein the photographed image is an image for photo printing by the printing device. Through the method of embodiments of the present invention, it is possible to control the printing device to print the photo.

## Description

### TECHNICAL FIELD

The present invention relates to the field of terminal processing technologies, and in particular to a photographing method and device, an electronic device and a storage medium.

### BACKGROUND

With the development of terminal technologies, usage demands of users for terminals are gradually increasing. Taking a photography scene as an example, some users believe that actual photos may have a better "atmosphere" than digital photos. In order to meet the needs of some users for the "atmosphere" of taking photos, these users still use "Instant" type cameras to take photos.

A photographic functionality of an "Instant" type camera cannot be realized in the existing electronic devices used for digital photography.

### SUMMARY

In order to overcome the problems existing in the related arts, the present invention provides a photographing method and device, an electronic device and a storage medium.

According to a first aspect of the present invention, there is provided a photographing method, including: displaying a first interface in a first shooting mode, in a case where a terminal is in a connected state with a printing device and a camera application of the terminal is launched, wherein the first interface includes a viewfinder area and a control area, the viewfinder area is configured to display a preview image, the control area is configured to display a first shooting mode control identifying the first shooting mode, and the first shooting mode is active in the connected state; in response to acquiring a photographing instruction, photographing an object to be photographed in the preview image to obtain a photographed image; and sending the photographed image to the printing device, wherein the photographed image is an image for photo printing by the printing device.

In an embodiment, after obtaining the photographed image, the method further includes: displaying a second interface, wherein the second interface is configured to display the photographed image and prompt information, and the prompt information is configured to prompt a photo printing state.

In an embodiment, the second interface includes a target control, and the method further includes: in response to acquiring a control instruction, controlling, based on the target control, the printing device to print the photographed image.

In an embodiment, the prompt information is displayed on the second interface in the following manner, including: in a case where the printing device is printing a photo, displaying first prompt information on the second interface; or in a case where the printing device has completed photo printing, displaying second prompt information on the second interface, wherein the second prompt information includes position information, and the position information is configured to indicate a photo retrieval position of the printing device corresponding to the printed image.

In an embodiment, the method further includes: in response to the printing device completing photo printing, displaying the first interface.

In an embodiment, photographing the preview image to obtain the photographed image includes: photographing the object to be photographed in the preview image to obtain a first photographed image; adding a target watermark to the first photographed image to obtain a second photographed image with the watermark, and using the second photographed image as the photographed image sent to the printing device, wherein the target watermark is a watermark set based on a watermark operation instruction.

In an embodiment, a connection between the terminal and the printing device is established in at least one of the following manners: the connection between the terminal and the printing device being established based on a connection component; or the connection between the terminal and the printing device being established based on a wireless communication mode.

In an embodiment, the control area is configured to display a plurality of shooting mode controls, and the method further includes: in response to acquiring a shooting mode switching instruction, switching from the first shooting mode control to a second shooting mode control, and displaying an interface in a second shooting mode, wherein the second shooting mode is a mode in which photo printing is disabled.

In an embodiment, the terminal includes a first screen portion and a second screen portion, and the first screen portion is foldable; displaying the first interface in the first shooting mode includes: in response to the first screen portion being in a folded state, controlling the second screen portion to display the first interface; and in response to the first screen portion being in an unfolded state, controlling the first screen portion to display the first interface, and/or controlling the second screen portion to display the first interface.

In an embodiment, the method further includes: in a case where the first screen portion is in the folded state, acquiring the preview image based on a first camera; and in response to switching the first screen portion from the folded state to the unfolded state, acquiring the preview image based on a second camera, wherein the first camera is a camera provided on a back side of the first screen portion, and the second camera is a camera provided on a display surface of the second screen portion.

According to a second aspect of the present invention, there is provided a photographing device, including a display unit, a processing unit, and a sending unit, wherein the display unit is configured to, in a case where a terminal is in a connected state with a printing device and a camera application of the terminal is launched, display a first interface in a first shooting mode, wherein the first interface includes a viewfinder area and a control area, the viewfinder area is configured to display a preview image, the control area is configured to display a first shooting mode control identifying the first shooting mode, and the first shooting mode is active in the connected state; the processing unit is configured to, in response to acquiring a photographing instruction, photograph an object to be photographed in the preview image to obtain a photographed image; and the sending unit is configured to send the photographed image to the printing device, wherein the photographed image is an image for photo printing by the printing device.

In an embodiment, the display unit is further configured to display a second interface, wherein the second interface is configured to display the photographed image and prompt information, and the prompt information is configured to prompt a photo printing state.

In an embodiment, the second interface includes a target control, and the display unit is further configured to, in a case where a control instruction is acquired, control, based on the target control, the printing device to print the photographed image.

In an embodiment, the prompt information is displayed on the second interface in the following manner, including: in a case where the printing device is printing a photo, displaying first prompt information on the second interface; or in a case where the printing device has completed photo printing, displaying second prompt information on the second interface, wherein the second prompt information includes position information, and the position information is configured to indicate a photo retrieval position of the printing device corresponding to the printed image.

In an embodiment, the display unit is further configured to, in a case where the printing device completes photo printing, display the first interface.

In an embodiment, the processing unit is configured to photograph the object to be photographed in the preview image in the following manner to obtain the photographed image: photographing the object to be photographed in the preview image to obtain a first photographed image; adding a target watermark to the first photographed image to obtain a second photographed image with the watermark, and using the second photographed image as the photographed image sent to the printing device, wherein the target watermark is a watermark set based on a watermark operation instruction.

In an embodiment, a connection between the terminal and the printing device is established in at least one of the following manners: the connection between the terminal and the printing device being established based on a connection component; or the connection between the terminal and the printing device being established based on a wireless communication mode.

In an embodiment, in a case where the control area is configured to display a plurality of shooting mode controls, the display unit is further configured to: in a case where a shooting mode switching instruction is acquired, switch from the first shooting mode control to a second shooting mode control, and display an interface in a second shooting mode, wherein the second shooting mode is a mode in which photo printing is disabled.

In an embodiment, in a case where the terminal includes a first screen portion and a second screen portion, and the first screen portion is foldable, the display unit is configured to display the first interface in the first shooting mode in the following manner: in a case where the first screen portion is in a folded state, control the second screen portion to display the first interface; and in a case where the first screen portion is in an unfolded state, control the first screen portion to display the first interface, and/or control the second screen portion to display the first interface.

In an embodiment, the processing unit is further configured to: in a case where the first screen portion is in the folded state, acquire the preview image based on a camera provided on a back side of the first screen portion; and in a case where the first screen portion is in the unfolded state, acquire the preview image based on a camera selected according to a camera selection instruction.

According to a third aspect of the present invention, there is provided an electronic device, including: a processor; and a memory configured to store executable instructions of the processor; wherein the processor is configured to execute the photographing method in the first aspect or any one of the embodiments of the first aspect.

According to a fourth aspect of the present invention, there is provided a storage medium having instructions stored thereon, wherein the instructions in the storage medium, when executed by a processor of a terminal, enable the terminal to execute the photographing method in the first aspect or any one of the embodiments of the first aspect.

The technical solutions provided by embodiments of the present invention may include the following beneficial effects: when the terminal is in the connected state with the printing device and the camera application of the terminal is launched, the first interface corresponding to the first shooting mode is displayed. The preview image is displayed by the viewfinder area included in the first interface, and the first shooting mode control identifying the first shooting mode is displayed by the control area. When the photographing instruction is acquired, the object to be photographed in the preview image is photographed through the first interface in the first mode, and the photographed image that can be printed by the printing device is obtained. Thus, when the terminal and the printing device are connected, the photographed image obtained is printed by the printing device.

It should be noted that the above general description and the following detailed description are merely exemplary and explanatory and should not be construed as limiting of the present invention. The scope of the invention is defined by the claims.

### BRIEF DESCRIPTION OF THE DRAWINGS

The accompanying drawings here, which are incorporated in and constitute a part of this specification, illustrate embodiments consistent with the present invention and, together with the description, serve to explain principles of the present invention.
FIG. 1A shows a flowchart of a photographing method according to an embodiment of the present invention.
FIG. 1B shows a schematic diagram of activation of a shooting mode according to an embodiment of the present invention.
FIG. 1C shows a schematic structural diagram of a connection structure according to an embodiment of the present invention.
FIG. 2A shows a schematic diagram of a connection state prompt according to an embodiment of the present invention.
FIG. 2B shows a schematic diagram of a first shooting mode prompt according to an embodiment of the present invention.
FIG. 2C shows a schematic diagram of display of a first interface in a first shooting mode according to an embodiment of the present invention.
FIG. 3A shows a schematic diagram of a scene of displaying a first interface according to an embodiment of the present invention.
FIG. 3B shows a flowchart of a method for displaying a first interface according to an embodiment of the present invention.
FIG. 3C shows a schematic diagram of a scene of displaying a first interface according to an embodiment of the present invention.
FIG. 3D shows a schematic diagram of a scene of displaying a first interface according to an embodiment of the present invention.
FIG. 3E shows a flowchart of a method for acquiring a preview image according to an embodiment of the present invention.
FIG. 4A shows a schematic diagram of displaying a photo to be printed when a first screen portion of a terminal is in an unfolded state according to an embodiment of the present invention.
FIG. 4B shows a schematic diagram of displaying a photo to be printed when a first screen portion of a terminal is in an unfolded state according to an embodiment of the present invention.
FIG. 5A shows a schematic diagram of printing a photographed image as a photo to be printed according to an embodiment of the present invention.
FIG. 5B shows a schematic diagram of selecting a target photo in an image library as a photo to be printed for printing according to an embodiment of the present invention.
FIG. 5C shows a schematic diagram of displaying a second interface according to an embodiment of the present invention.
FIG. 6 shows a schematic diagram of a photo retrieval position according to an embodiment of the present invention.
FIG. 7 shows a block diagram of a photographing device according to an embodiment of the present invention.
FIG. 8 shows a block diagram of a device for photographing an image according to an embodiment of the present invention.
FIG. 9 shows a block diagram of a device for photographing an image according to an embodiment of the present invention.
FIG. 10 shows a front view of a terminal according to an embodiment of the present invention,
FIG. 11 shows a bottom view of a terminal according to an embodiment of the present invention.
FIG. 12 shows a schematic structural diagram of a functional system according to an embodiment of the present invention.
FIG. 13 shows a schematic structural diagram of a communication connection assembly according to an embodiment of the present invention.
FIG. 14 shows a cross-sectional view of a connection structure according to an embodiment of the present invention.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. Implementations set forth in the following description of the embodiments do not represent all implementations consistent with the present invention.

With the development of terminal technologies, usage demands of users for terminals are gradually increasing. Taking a photography scene as an example, some users believe that actual photos may have a better "atmosphere" than digital photos. In order to meet the needs of some users for the "atmosphere" of taking photos, these users still use "Instant" type cameras to take photos. However, due to an operating principle and structural design of "Instant" cameras, if it is desired to realize the function of the "Instant" camera on digital photography terminals, it may violate the pursuit of "lightweight" design of the current digital photography terminals.

Embodiments of the present invention provide a photographing method, in which when a terminal is connected to a printing device, a first shooting mode is active, and a first interface in the first shooting mode is displayed on a display screen of the terminal, a photographed image is acquired through the first interface, and then the photographed image acquired is sent to the printing device for photo printing through a terminal camera application. The function of the "Instant" camera is realized through the terminal device, thereby solving the above technical problems.

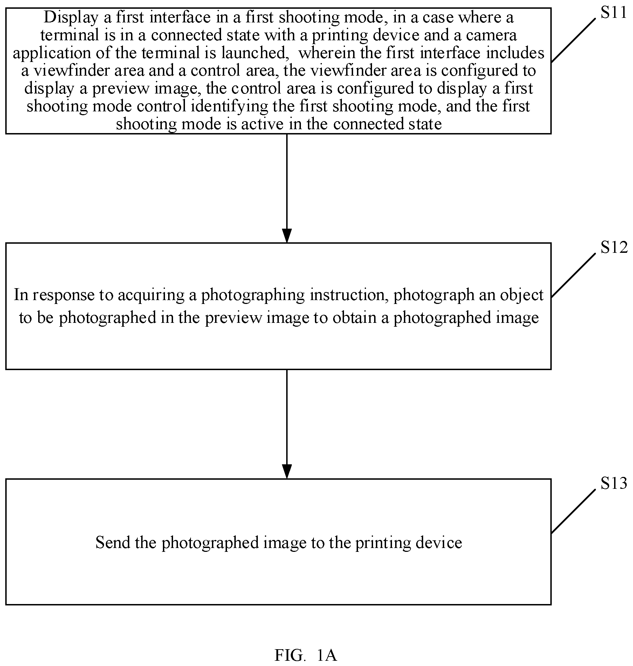

FIG. 1A shows a flowchart of a photographing method according to an embodiment of the present invention. As shown in FIG. 1A, the photographing method is used in a terminal and includes steps S 11 to S13.

In the step S11, when the terminal is in a connected state with a printing device and a camera application of the terminal is launched, a first interface in a first shooting mode is displayed, the first interface includes a viewfinder area and a control area, the viewfinder area is configured to display a preview image, the control area is configured to display a first shooting mode control identifying the first shooting mode, and the first shooting mode is active in the connected state.

In the step S 12, in response to acquiring a photographing instruction, an object to be photographed in the preview image is photographed to obtain a photographed image.

In the step S13, the photographed image is sent to the printing device.

The photographed image is an image for photo printing by the printing device.

In embodiments of the present invention, when the terminal is in the connected state with the printing device and the camera application of the terminal is launched, the first interface corresponding to the first shooting mode is displayed. The preview image is displayed by the viewfinder area included in the first interface, and the first shooting mode control identifying the first shooting mode is displayed by the control area. When the photographing instruction is acquired, the object to be photographed in the preview image is photographed through the first interface in the first mode, and the photographed image that can be printed by the printing device is obtained. Thus, when the terminal and the printing device are connected, the photographed image obtained is printed by the printing device, so as to meet the user's need for realizing the functions of an "Instant" type camera through a digital photography device.

It should be noted that, in some embodiments, the terminal includes but is not limited to, for example, at least one of a mobile phone, a wearable device, an Internet of Things device, a car with a communication function, a smart car, a pad, a computer with a wireless transceiver function, a Virtual Reality (VR) terminal device, an Augmented Reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home.

Due to different forms of the above-mentioned terminals, specific implementations of the relevant embodiments in FIG. 1A may be different.

In some scenarios, taking the terminal being the smart car as an example, when the smart car establishes a connection with the printing device, and in a mode of photographing and printing photos, the photographing instruction acquired by the smart car may be, for example, that performing the shooting operation through a driving recorder or another image acquisition device to obtain the corresponding photo to be printed. The obtained photo to be printed is sent to the printing device connected to the smart car, and the printing device prints the photo to be printed.

In some other scenarios, taking the terminal being the mobile phone as an example, when the mobile phone establishes a connection with the printing device, and the mobile phone is determined to be in a mode of photographing and printing photos, the photographing instruction acquired by the mobile phone may be, for example, that a user may take a photo by means of a "camera" application built into the mobile phone to obtain the corresponding photo to be printed. The obtained photo to be printed is sent to the printing device connected to the mobile phone, and the printing device prints the photo to be printed.

In order to make the photographing method provided in the present invention easy to understand, in the following embodiments, the photographing method provided in embodiments of the present invention will be described through a "mobile phone" type terminal.

It should be noted that the printing device may be, for example, a portable printing device or a desktop printing device, and the terminal may be, for example, a terminal whose screen portion has a folding function or a terminal whose screen portion does not have the folding function. For ease of understanding, the printing device in the following embodiments will be described as a "photo printing device" or a "photo printer" for illustration. It should be understood that printing devices other than the photo printing device can also implement the relevant embodiments described in the present invention.

In some embodiments, that the first shooting mode can be active in the connected state may be, for example, that when the terminal is in the connected state with the printing device and the camera application is launched, the first interface is displayed in the first shooting mode by default based on the user's settings. Alternatively, when the terminal is in the connected state with the printing device and the camera application is launched, the first shooting mode control for controlling the display of the first shooting mode is in an operable state to enable the user to select the first shooting mode through the first shooting mode control of the first shooting mode. Alternatively, when the terminal is in the connected state with the printing device and the camera application is launched, the first shooting mode control of the first shooting mode can be called through another control, to enable the user to select the first shooting mode through the called first shooting mode control.

In some embodiments, when the terminal is not in the connected state with the printing device, the first shooting mode control may be displayed in the interface, but the first shooting mode control is in an inoperable state (for example, the user cannot select the first shooting mode by clicking the first shooting mode control), or the first shooting mode control may not be displayed. Alternatively, when the terminal is not in the connected state with the printing device, if the user clicks the first shooting mode control, prompt information prompting the user that the terminal and the printing device are not connected appears.

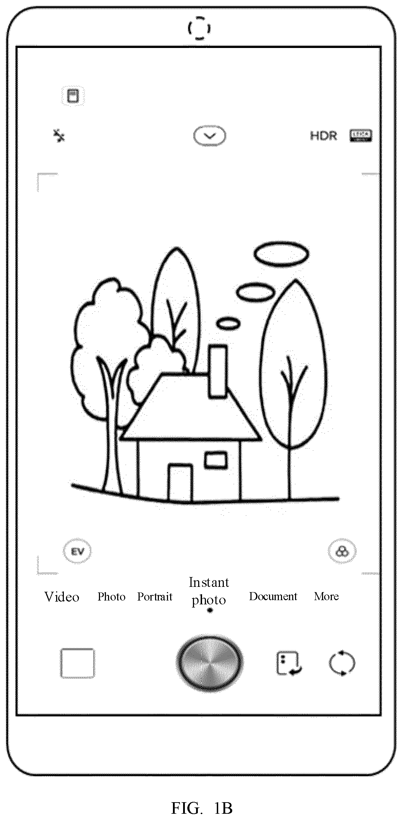

For example, the display of the first interface in the first shooting mode may be as shown in FIG. 1B, which shows a schematic diagram of activation of a shooting mode according to an embodiment of the present invention. In FIG. 1B, when the terminal is connected to the printing device and the camera of the terminal is enabled, the displayed first shooting mode may be shown as a "instant photo" mode (or referred to as "portable shoot" mode or "portable photo" mode), in which a "landscape image" can be understood as the preview image displayed on the first interface. In FIG. 1B, an area where "video, photo, portrait, instant photo and so on" is located may be understood as the control area mentioned in the above embodiments. The "instant photo" control in the control area may be understood as the first shooting mode control, and the user may choose to enter the "instant photo" mode by directly clicking on the "instant photo" control.

In some embodiments, the control area is configured to display a plurality of shooting mode controls. In response to acquiring a shooting mode switching instruction, the first shooting mode control is switched to a second shooting mode control, and an interface in a second shooting mode is displayed, the second shooting mode is a mode in which the photo printing is disabled.

For example, following the above-mentioned relevant embodiment of FIG. 1B, when the "instant photo" mode is the first shooting mode, the "photo" mode can be understood as the second shooting mode. That is, when the terminal acquires the shooting mode switching instruction (regardless of whether the terminal is connected to the printing device), it can select to switch from the "instant photo" mode to another mode, such as the "photo" mode.

In some embodiments, the control area may be hidden. If the control area is hidden, the user can call the control area through a control for calling the control area, and then click the first shooting mode control in the called control area to select the first shooting mode.

It should be understood that terminals of other forms can also implement the corresponding steps in FIG. 1A, and for their implementation processes, reference may be made to examples listed in the above two scenarios, and adaptive adjustments are made based on their own form structures.

The photographing method described in the above embodiments is mainly implemented by the terminal and the printing device connected to the terminal. The connection between the terminal and the printing device can usually be implemented by at least one of the following connection modes 1) or 2).
1) The terminal establishes a connection with a target printing device based on a wireless communication mode. In some scenarios, the wireless communication connection may be, for example, based on Bluetooth communication, Internet of Things (IoT) communication, Ultra Wide Band (UWB) or Wireless Fidelity (WiFi) to achieve information exchange between the terminal and the target printing device. For example, the terminal sends the image to be printed and the relevant instructions for printing the image to the printing device, and the printing device receives the image to be printed and the relevant instructions for printing the image sent by the terminal, and feeds back the corresponding processing result (such as an image printing result) to the terminal.
2) The terminal establishes the connection with the target printing device based on a connection component (or referred to as a cable communication connection). In some scenarios, for a wired communication connection, the terminal and the printing device may be, for example, assembled and connected through a connection structure. The connection structure may include, for example, a snapping structure (or an accommodation space) for snapping and accommodating the terminal and the printing device, and the snapping structure or the accommodation space includes a connection line between the terminal and the printing device. For the wired communication connection, for the information exchange between the terminal and the printing device, reference may be made to the relevant description in 1), which will not be repeated here.

Based on the different connection modes between the terminal and the printing device, the corresponding methods for determining whether the terminal and the printing device are connected will also be different.

For the connection mode 1), it can be determined that the connection is established by detecting an interactive signal between the terminal and the printing device. For example, the terminal detects acknowledgement (ACK) information sent by the printing device after the connection is established to determine that the connection is established between the terminal and the printing device.

For the connection mode 2), it can be detected that the terminal and the printing device are assembled and connected through the connection structure, for example, access information of the connection structure and printer connection information sent through the connection structure are detected.

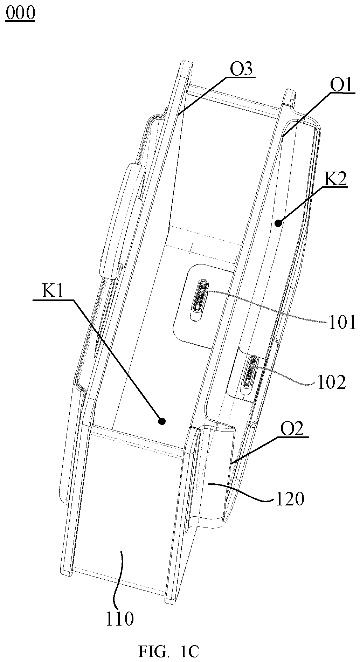

For ease of understanding, embodiments of the present invention will exemplarily illustrate the connection structure mentioned in the connection mode 2) through FIG. 1C. FIG. 1C shows a schematic structural diagram of a connection structure according to an embodiment of the present invention. As shown in FIG. 1C, FIG. 1C shows the connection structure 000 between the terminal and the printing device, and the connection structure 000 includes a first communication connector 101 and a second communication connector 102 for implementing the communication connection between the terminal and the printing device, a first slot K1 for placing the printing device, and a second slot K2 for placing the terminal.

In some scenarios, the terminal is placed in the second slot K2, and establishes, through the second communication connector 102, a connection with a printing device placed in the first slot K1 and connected to the first communication connector 101, and the terminal is in a communication connection state. In some embodiments, when the terminal establishes the connection with the printing device, the terminal will enter the first shooting mode when launching the camera. In the first shooting mode, the terminal can exchange the signal with the printing device simultaneously during the shooting process. For example, in the first shooting mode, the terminal can send the photo photographed by the camera to the printer for printing by the printer. The first shooting mode can be, for example, called the "instant photo" mode as described in the embodiment of FIG. 1B.

It should be noted that the first communication connector 101 and the second communication connector 102 may be Universal Serial Bus (USB) male interfaces.

As shown in FIG. 1C, when the terminal slides into the second slot K2 through a first opening O1, a display screen of the terminal can be exposed through a second opening O2 of a clamping member 120, so that the user can send information on a function to be implemented to the printing device by operating the display screen of the terminal.

In the present invention, when the terminal is a non-foldable device, a size of the second slot K2 of the clamping member 120 for accommodating the terminal can be adapted to a size of the non-foldable device, so that the terminal can be completely located in the second slot K2 of the clamping member 120.

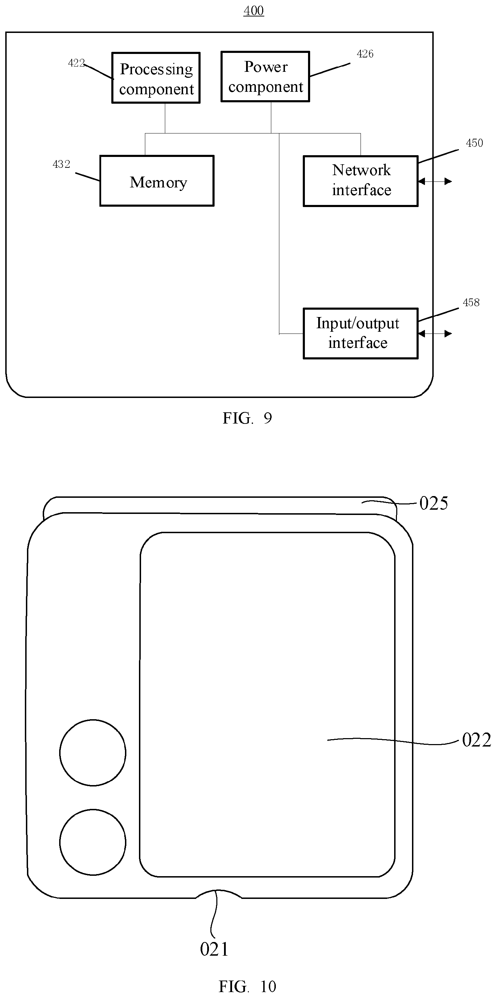

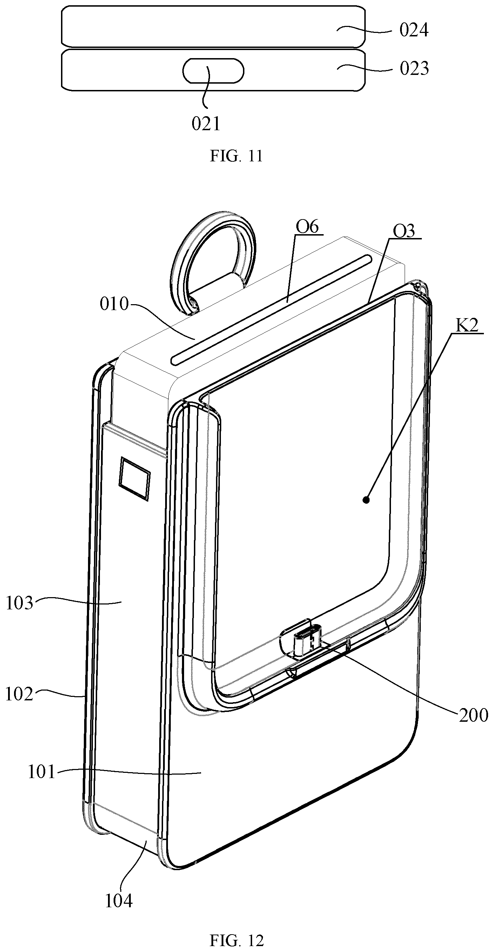

As shown in FIGS. 10 and 11, when the terminal is a foldable device, for example, when the terminal is a foldable mobile phone, the foldable device may include: a first main body 023, a second main body 024 and a rotating shaft 025. The first main body 023 and the second main body 024 may rotate relative to each other through the rotating shaft 025, so that the foldable device can be folded or unfolded. The second slot K2 of the clamping member 120 may be used to accommodate the first main body 023, that is, the foldable device may be connected to the connection structure 000 through the first main body 023 located in the second slot K2. When the first main body 023 is located in the second slot K2, the second main body 024 may be located outside the second slot K2 and may rotate relative to the first main body 023, so that the foldable device is in a folded state or an unfolded state.

In this way, when the first main body 023 is located in the second slot K2 and the foldable device is in the unfolded state, the display screen of the foldable device can be exposed through the second opening O2 of the clamping member 120, so that the user can trigger the foldable device to send the information on the function to be implemented to the printing device by operating the display screen.

It should be noted that the second main body 024 may have a secondary screen 022, and the secondary screen 022 may be arranged opposite to the display screen of the foldable device. In this way, when the first main body 023 is located in the second slot K2 and the terminal is in the folded state, the secondary screen 022 of the second main body 024 may be located on a side of the second main body 024 away from the first main body 023. Thus, the user may trigger the foldable device to send the information on the function to be implemented to the printing device by operating the secondary screen 022.

It should also be noted that an overall size of the printing device is relatively small. For example, the printing device may be a small photo printer, also known as a pocket photo printer. When the terminal is the foldable device, and the foldable device is a small-sized foldable device, the foldable device may be placed in the second slot K2 of the connection structure 000 when the small-sized foldable device is in the folded state. In this case, the overall size of the connection structure 000 connected with the terminal may be relatively small, so as to ensure that the connection structure 000 may be more convenient to carry.

In some embodiments, as shown in FIG. 12, when the printing device is a portable printing device, the portable printing device may have a printing outlet O6, and photos, documents or labels printed by the portable printing device may be taken out through the printing outlet O6.

When the printing device and the terminal are in a communication connection through wired communication, the printing outlet O6 of the portable printing device located in the first slot K1 can be arranged opposite to a bottom plate 104 in a support shell of the connection structure 000. In this way, the printing outlet O6 of the portable printing device can be exposed through a third opening O3 of the support shell.

When the printing device and the terminal are in a communication connection through wireless communication, compared with the wired communication connection, there is no need to provide the first communication connector in the first slot K1 of the support shell, so that the printing outlet O6 of the portable printing device can be disposed toward the bottom plate 104, and the bottom plate 104 can have an opening adapted to the printing outlet O6 of the portable printing device, so that the printing outlet O6 of the portable printing device can be exposed through the opening of the bottom plate 104.

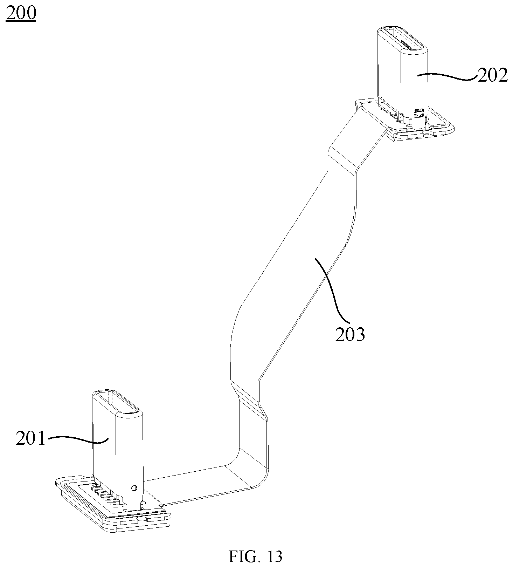

In the present invention, when the printing device and the terminal are in a communication connection by wired communication, referring to FIG. 13, which is a schematic structural diagram of a communication connection assembly provided in an embodiment of the present invention, the communication connection assembly 200 in the connection structure 000 may also include a flexible circuit board 203. One end of the flexible circuit board 203 in the communication connection assembly 200 may be connected to the first communication connector 101, and the other end may be connected to the second communication connector 102. That is, when the printing device is located in the first slot K1 and is in a communication connection with the first communication connector 101, and the terminal is located in the second slot K2 and is in a communication connection with the second communication connector 102, the terminal and the printing device are in a communication connection through the flexible circuit board 203.

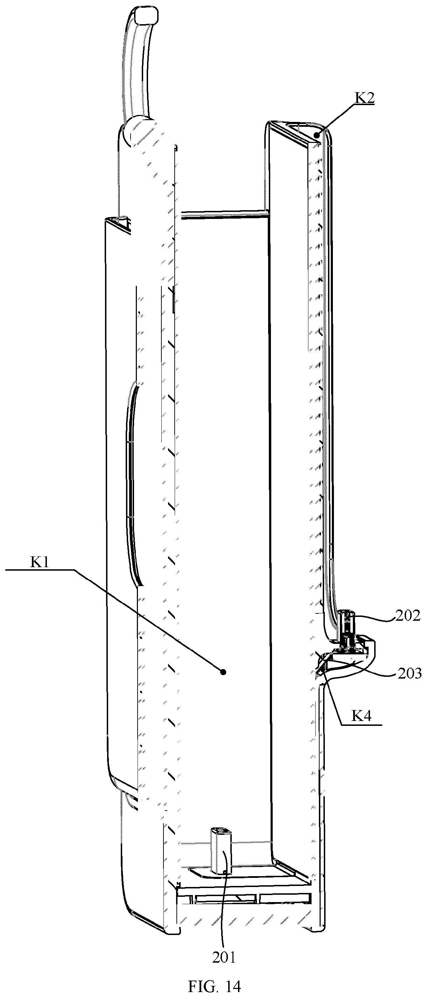

FIG. 14 is a cross-sectional view of a connection structure provided in an embodiment of the present invention. As shown in FIG. 14, the support shell in the connection structure 000 may also have a connected groove K4. The connected groove K4 of the support shell may be connected to the first slot K1 and may be connected to the second slot K2. At least part of the flexible circuit board 203 in the communication connection assembly 200 may be located in the connected groove K4 of the support shell. In this way, through the communication between the connected groove K4 of the support shell and the first slot K1, one end of the flexible circuit board 203 may be located in the first slot K1 to be connected to the first communication connector 101 located in the first slot K1. The other end of the flexible circuit board 203 may be located in the second slot K2 to be connected to the second communication connector 102 located in the second slot K2.

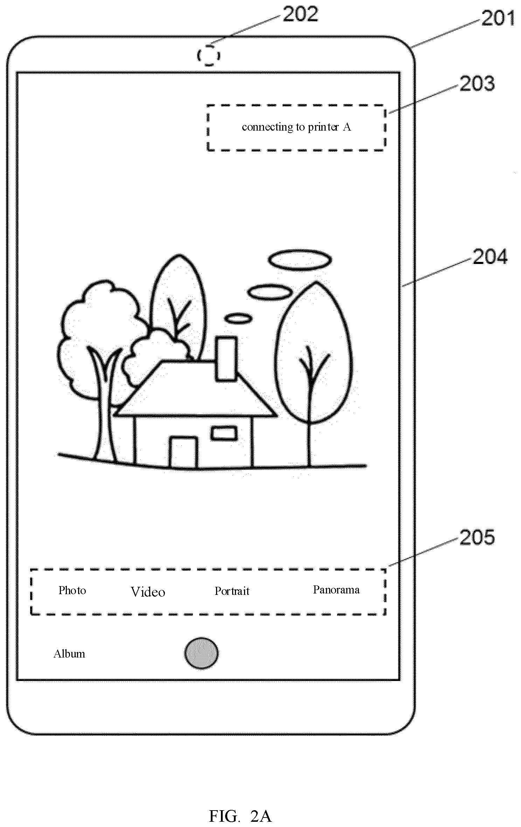

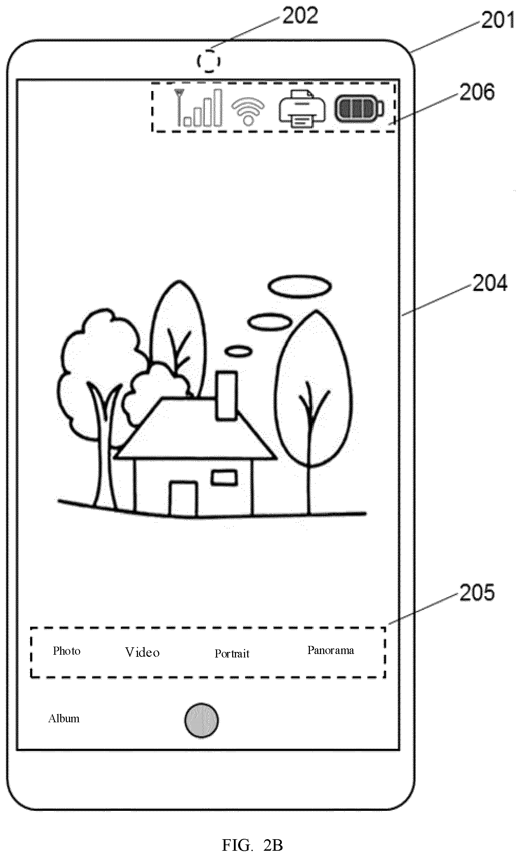

When the terminal is connected to the printing device, the terminal can prompt the user in a camera preview interface to prompt the user that the terminal and the printing device are currently connected. As for a prompt mode, the prompting can be performed, for example, through two examples shown in FIG. 2A and FIG. 2B.

In some scenarios, if the user needs to get a more obvious prompt in this mode, the user can be prompted about the current shooting mode in a manner of FIG. 2A. FIG. 2A shows a schematic diagram of a connection state prompt according to an embodiment of the present invention. As shown in FIG. 2A, the terminal 201 is a mobile phone type terminal, which has a rear camera 202. The terminal 201 has a connection relationship with a printer A (the printing device), and after the camera is launched, a text prompt "connecting to printer A" (or other text descriptions that can be used to prompt the user, such as being in the photographing and printing photos) is given to the user through a text prompt area 203 in a first camera interface 204. In this mode, the first camera interface 204 will also display a related extended area 205 for the user to select the corresponding shooting function (photo, video, portrait or panorama) in the current mode.

For FIG. 2A, it should be noted that a circular filled graphic in the first camera interface 204 represents a camera shutter button, and the preview image in the interface (i.e., the image in the center) represents an image captured by the camera.

It should also be noted that the text prompt area 203 can be set in size or text prompt color or prompt duration and other text appearance styles according to user needs to meet the user's prompt needs (obvious prompt or subtle prompt, etc.).

Based on this, the text reminder mode shown in FIG. 2A can be used to prompt the user of the current shooting mode of the terminal.

In some scenarios, if the user wants to get the less obvious prompt in this mode (for example, the user is worried that the more obvious prompt may affect the framing effect during shooting), the user can be prompted that the terminal and the printing device are currently connected in the manner of FIG. 2B. FIG. 2B shows a schematic diagram of a first shooting mode prompt according to an embodiment of the present invention. Continuing with the description of the relevant embodiment in FIG. 2A, a difference between FIG. 2B and FIG. 2A is that the prompt to the user is implemented through a prompt area 206. For example, a battery level of the terminal 201 is prompted, and mobile communication signal and network service signal icons in the prompt area 206 can be used to prompt a mobile network state of the terminal 201, etc. The printer icon in the prompt area 206 can be used to prompt that the terminal 201 is currently connected to the printing device.

Based on this, the user can be prompted that the terminal is currently connected to the printing device by using the icon in FIG. 2B.

It should be understood that for the above two prompt modes, corresponding selection items can be set for the user in a setting program, and a prompt mode combining the above two prompt modes can be set for the user to meet the needs of the user.

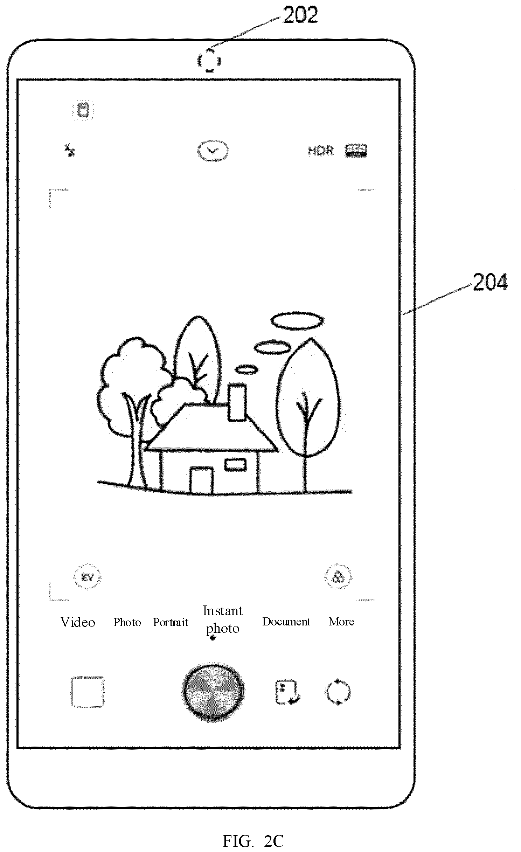

When the connection between the terminal and the printing device is established and the camera application of the terminal is launched, the display interface of the terminal may be, for example, as shown in FIG. 2C. FIG. 2C shows a schematic diagram of display of a first interface in a first shooting mode according to an embodiment of the present invention. As shown in FIG. 2C, when the connection between the terminal and the printing device is established and the first shooting mode (such as the "instant photo" mode) is entered, the display interface may be as shown in FIG. 2C. In FIG. 2C, the user may be prompted that the terminal is currently connected with the printing device and in the first shooting mode through the "instant photo" control in the control area of the camera application. It should be noted that for how to activate the first shooting mode, reference may be made to the relevant description of the above embodiments, which will not be repeated here.

It should be understood that in some embodiments, the prompt for the establishment of the connection between the terminal and the printing device in the embodiments of FIG. 2A and FIG. 2B may be omitted, and the user may be directly prompted whether the current mode is the target mode through the relevant embodiment of FIG. 2C.

For the photo to be printed, according to different needs of users, the photo to be printed can be determined in the following different manners. For example, the preview image is determined as the photo to be printed, or a target photo is selected from the preview images as the photo to be printed. The preview image is an image photographed by a front camera of the terminal in the mode of photographing and printing photos.

It should be understood that if the user wants to print a photo during the shooting process, which may be, for example, instant-shooting and instant-printing of the "Instant" mode, and the photo currently photographed is directly sent to the printer for printing, that is, the preview image is determined as the photo to be printed. Alternatively, after a shooting process is completed, the user selects the photo that he/she wants to print from an album or a plurality of photo sequences, and sends it to the printer for printing. That is, the target image is selected from the preview images as the photo to be printed.

In order to achieve the above two cases, for example, when the terminal is connected to the printing device and it is determined that the terminal is in the mode of photographing and printing photos, a sub-mode is established to determine a type of the photo to be printed for the user. Different sub-modes correspond to different types of photos to be printed. For example, the photo to be printed in the first sub-mode is the photographed photo, and the photo to be printed in the second sub-mode is a photo selected from the album or other windows.

It should be understood that when a user uses a terminal for shooting, due to the difference in the structure and function of the terminal, the corresponding operations that can be performed by the user during the shooting process will also be different. For example, the corresponding operations performed by the user during the shooting process may be different for a terminal whose screen does not have the folding function (e.g., a terminal whose screen does not support a folded state or an unfolded state, i.e., a non-folding screen mobile phone) and a terminal whose screen has a folding function (e.g., a terminal whose screen supports a folded state or an unfolded state, i.e., a folding screen mobile phone).

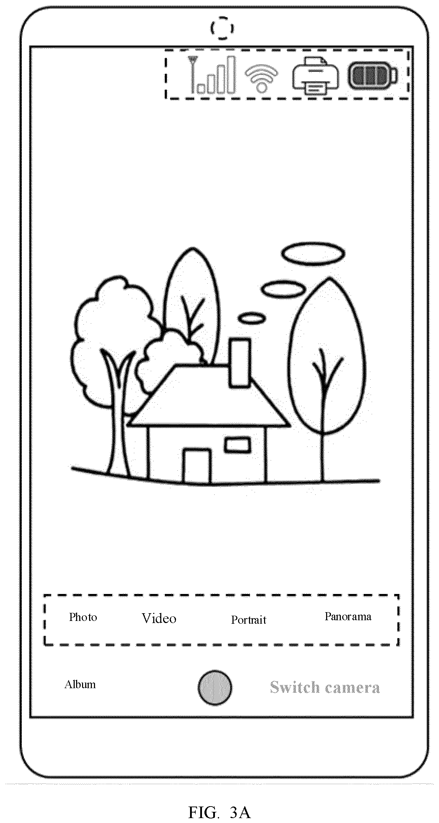

In some embodiments, for the non-folding screen mobile phone, the first interface can be displayed, for example, through the scenario described in FIG. 3A. FIG. 3A shows a schematic diagram of a scene of displaying a first interface according to an embodiment of the present invention. As shown in FIG. 3A, continuing the description of the relevant embodiment of FIG. 2B, a "switch camera" button (in some embodiments, it may also be other control icons, etc.) exists in the lower right corner of the first interface, and the user can use this button to select the front camera or the rear camera. If the user currently selects the camera through the relevant settings, this button will be in an unselectable state as shown in FIG. 3 A (indicated by the light gray font color in the figure), thereby realizing that when the terminal and the printing device are connected, the preview image is captured by default based on the rear camera of the terminal, and then the shooting is performed.

As for the folding screen mobile phone, it can be generally divided into a plurality of screen portions according to its folding structure or display structure. For ease of understanding, embodiments of the present invention will describe a folding screen mobile phone with two screen portions.

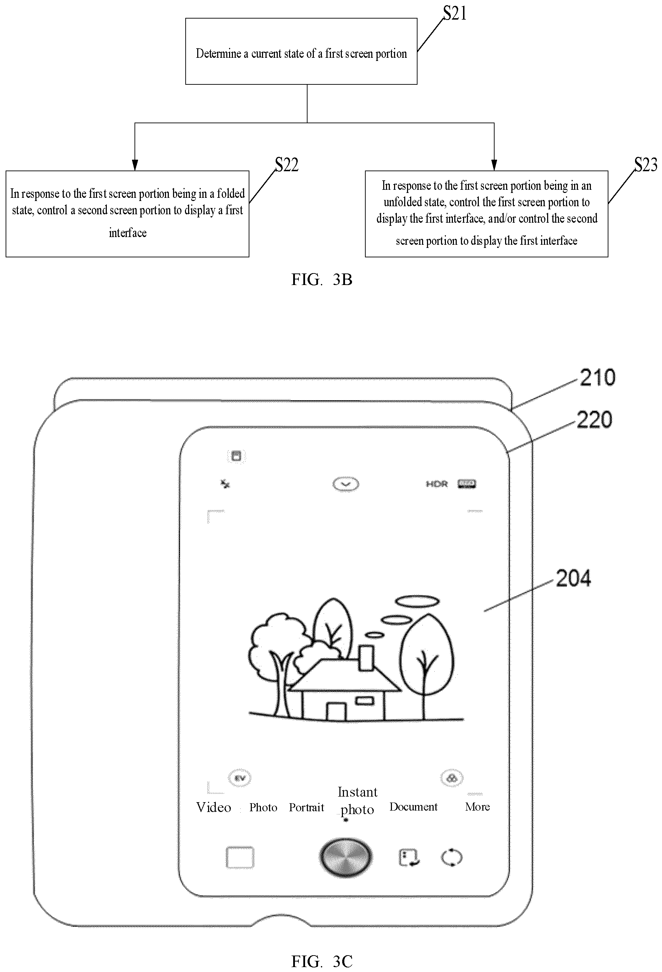

In some embodiments, taking a terminal including a first screen portion and a second screen portion and the first screen portion being foldable as an example, the first interface can be displayed as shown in FIG. 3B. FIG. 3B shows a flowchart of a method for displaying a first interface according to an embodiment of the present invention, and the method includes steps S21 to S23.

In the step S21, a current state of a first screen portion is determined.

In the step S22, in response to the first screen portion being in a folded state, a second screen portion is controlled to display a first interface.

In the step S23, in response to the first screen portion being in an unfolded state, the first screen portion is controlled to display the first interface, and/or the second screen portion is controlled to display the first interface.

In embodiments of the present invention, when the first screen portion of the terminal has a folding function, a screen which is used to display the preview image when the first screen portion of the terminal is in different screen states can be determined, so that the user can perform corresponding photographing and printing photo operations on the corresponding screen.

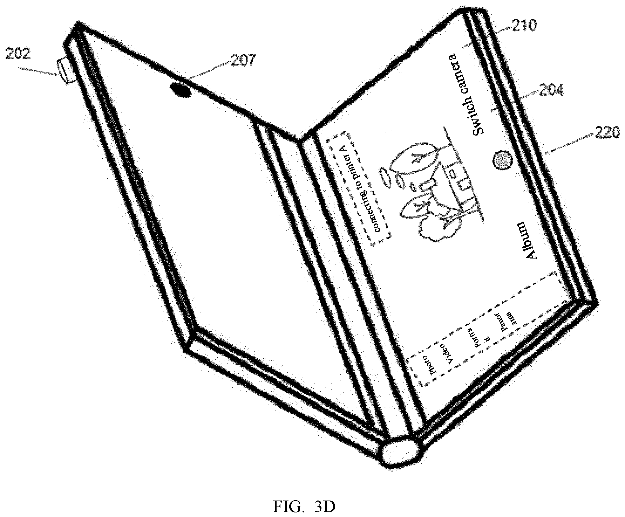

For ease of understanding, embodiments of the present invention will exemplarily illustrate display scenes of the first interface in different screen states through FIGS. 3C and 3D.

FIG. 3C shows a schematic diagram of a scene of displaying a first interface according to an embodiment of the present invention. As shown in FIG. 3C, the terminal in the figure is a terminal with a first screen portion 210 having a folding function, and the first screen portion 210 in FIG. 3C is in a folded state. When the first screen portion 210 is in the folded state, the second screen portion 220 is controlled to display the first interface 204.

FIG. 3D shows a schematic diagram of a scene of displaying a first interface according to an embodiment of the present invention. As shown in FIG. 3D, the terminal in the figure is a terminal with a first screen portion 210 having a folding function, and the first screen portion 210 in FIG. 3D is in an unfolded state. When the first screen portion 210 is in the unfolded state, the first screen portion 210 can be controlled to display the first interface, and/or the second screen portion can be controlled to display the first interface.

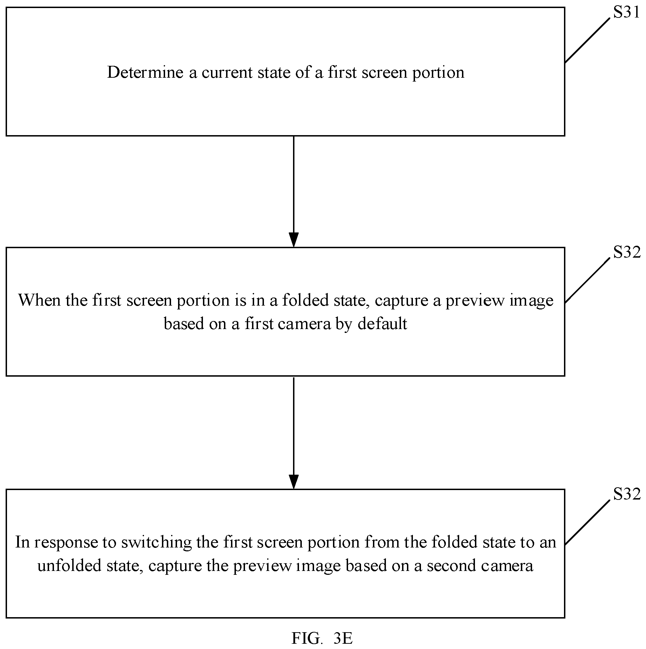

As can be seen from the above example description, for the folding screen terminal, there are multiple possibilities for the camera selected to capture the preview image when the screen with the folding function is in the folded state or the unfolded state. For different screen states, the corresponding methods for capturing the preview image can be shown in FIG. 3E. FIG. 3E shows a flowchart of a method for acquiring a preview image according to an embodiment of the present invention, and the method includes steps S31 to S33.

In the step S31, a current state of a first screen portion is determined.

In the step S32, when the first screen portion is in a folded state, a preview image is captured based on a first camera by default.

In the step S33, in response to the first screen portion being switched from the folded state to an unfolded state, the preview image is captured based on a second camera.

The first camera is a camera provided in a back side of the first screen portion, and the second camera is a camera provided in a display surface of the second screen portion.

In embodiments of the present invention, when the current posture (the folded state or the unfolded state) of the first screen portion changes, the camera is switched, so that the user can continuously capture the object to be photographed when the current posture of the first screen portion changes, thereby keeping the photographing action continuous.

It should be understood that for some foldable mobile phones, when the first screen portion is in the folded state, the user can use the first camera to realize a "selfie" function. When the user unfolds the first screen portion, in order to ensure the continuity of the "selfie" process, the terminal can switch to the second camera to capture the preview image by default when the first screen portion is unfolded.

However, it should be understood that the user can also make the camera selection when the first screen portion is unfolded.

In embodiments of the present invention, for a terminal whose screen supports the folded state or the unfolded state, the current posture (the folded state or the unfolded state) of the first screen portion is determined, and the corresponding shooting mode is selected based on the determined posture of the first screen portion to determine the camera selected for shooting, thereby completing the shooting. It can be understood that for a terminal with a first screen portion having a folding function, the camera of its inner screen is usually a front camera. Therefore, in the folded state of the terminal, the front camera will be structurally hidden and blocked by its own screen, so in this case, the rear camera will be used for shooting by default.

It can also be understood that for a terminal whose screen supports a folded state or an unfolded state, if it is in the unfolded state, its front camera and rear camera will not be hidden or blocked by themselves in structure, so in this case, both cameras of the terminal can provide the shooting service for the user. The user can choose to capture the image with the rear camera or the front camera according to his/her needs. It should be noted that if the user still wants to capture the image with the rear camera when the terminal screen is in the unfolded state, the setting may be made in the current relevant mode settings. For example, it is set to "the rear camera is always enabled, and the front camera is not enabled".

It should be understood that for a terminal whose screen supports a folded state or an unfolded state, the user's shooting experience is different when the screen is in the folded state or the unfolded state. Due to the difference in hardware parameters between the front camera and the rear camera, the rear camera usually has a better imaging effect. Therefore, when the terminal establishes the connection with the printing device and determines that it is in the mode of photographing and printing photos, for a terminal whose screen supports a folded state or an unfolded state, the user can be advised on the shooting mode selection based on the relevant suggestion information.

For example, in some embodiments, "it is recommended that the user folds the terminal screen for shooting" may be displayed on a display page of the terminal, which may enable the user to fold the terminal screen based on the prompt information and use the rear camera for shooting.

For another example, in some embodiments, the terminal may send a matching shooting mode selection suggestion to the user based on the parameters of the shooting scene captured by the relevant optical sensor. For example, if the current shooting scene is a backlit scene, the user is advised to use the front camera for shooting.

For ease of understanding, continuing the description of the relevant embodiment of FIG. 3D, where 207 indicates a front camera, and there will be a "switch camera" button in the lower right corner of the first interface 204, and the user can use this button to select the front camera or the rear camera. If the terminal 201 is currently in the screen unfolded state, this button will be in a selectable state as shown in FIG. 3D (indicated by the black font color in the figure), thereby enabling the user to capture the preview image based on the front camera and then perform the shooting. If the user sets it in advance to capture the image with the rear camera, the button can be presented in an unselectable state. For details, reference may be made to the description of the relevant embodiment in FIG. 3A, which will not be repeated here.

When a terminal whose screen supports a folded state or an unfolded state is in an unfolded state, since there will be at least two unfolded screen areas after the unfolding, it is necessary to determine how to display the photo to be printed in the unfolded area.

In some embodiments, a current unfolding angle corresponding to the first screen portion of the terminal satisfies an angle threshold, and the photo to be printed is displayed on the first screen portion of the terminal or the second screen portion of the terminal.

The fact that the current unfolding angle corresponding to the first screen portion of the terminal satisfies the angle threshold can be understood as the terminal completing the wake-up by unfolding the screen and maintaining the current state to meet the user's shooting need.

It should be understood that when the terminal whose screen supports a folded state or an unfolded state is in the unfolded state, the photo to be printed can be displayed in different screen unfolded areas to meet different shooting needs of users. The photo to be printed can be the photographed image obtained in the above embodiments.

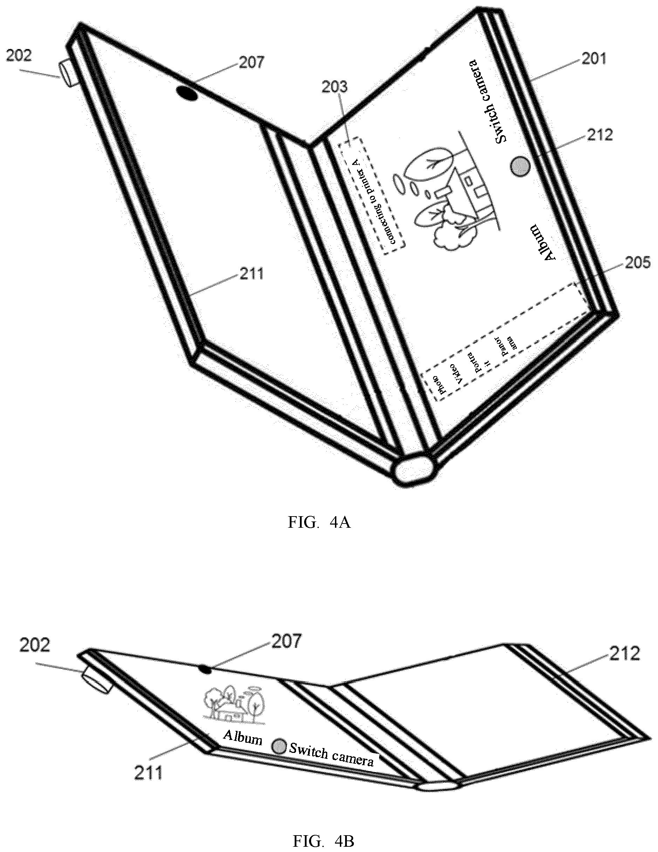

For ease of understanding, the above two different display modes will be explained through FIGS. 4A and 4B. FIG. 4A shows a schematic diagram of displaying a photo to be printed when a first screen portion of a terminal is in an unfolded state according to an embodiment of the present invention. As shown in FIG. 4A, following the description of the relevant embodiment of FIG. 3D, after the first screen portion of the terminal 201 is in the unfolded state, there will be a first display area 211 of the first screen portion and a second display area 212 of the first screen portion. The user can perform corresponding shooting operations by touching the second display area 212 of the first screen portion. The picture of the photo to be printed presented in the second display area 212 of the first screen portion can be a photo acquired by the front camera 207 and/or the rear camera 202. In this case, the user can use this operation mode to achieve the shooting at a special shooting angle.

FIG. 4B shows a schematic diagram of displaying a photo to be printed when a first screen portion of a terminal is in an unfolded state according to an embodiment of the present invention. As shown in FIG. 4B, following the description of the relevant embodiment of FIG. 3C, after the first screen portion of the terminal 201 is in an unfolded state, there will be a first display area 211 of the first screen portion and a second display area 212 of the first screen portion. The user can perform corresponding shooting operations by holding the second display area 212 of the first screen portion and touching the first display area 211 of the first screen portion. The picture of the photo to be printed presented in the first display area 211 of the first screen portion can be a photo acquired by the front camera 207 and/or the rear camera 202. It should be noted that in order to make the picture in FIG. 4B more concise, the text prompt area 203 and the related extended area 205 are omitted in FIG. 4B compared with FIG. 4A, and the text prompt area 203 and the related extended area 205 can be set in the first display area 211 of the first screen portion and the second display area 212 of the first screen portion according to user needs (the same is true for the relevant embodiment in FIG. 4A).

Based on this, according to his/her different needs, the user can select a shooting mode that satisfies his/her needs based on the corresponding display mode when the terminal screen is in the unfolded state.

After the shooting mode is determined, the user performs the shooting, for example, by operating the corresponding display interface described in the above embodiments, or by setting the corresponding function key, or by a preset gesture. For example, the user can set a shooting gesture in the shooting setting in advance (for example, the action of opening the palm for more than 3 seconds is the action of controlling the shooting), and the detection is performed by the camera of the terminal. If the set shooting gesture is detected, the terminal automatically performs the shooting.

Based on this, the user can complete the shooting in the mode of photographing and printing photos through the terminal, and acquire the corresponding photo to be printed. However, some users may also have the requirement of adding watermarks to the photo to be printed. That is, the photo to be printed needs to have watermark information.

In some embodiments, the photo to be printed with the watermark information can be acquired in the following manner: the object to be photographed in the preview image is photographed to obtain a first photographed image; a target watermark is added to the first photographed image to obtain a second photographed image with the watermark, and the second photographed image is used as the photographed image sent to the printing device; and the target watermark is a watermark selected based on a user watermark selection operation instruction.

In embodiments of the present invention, the target watermark can be automatically added to the photographed image, or the watermark (the watermark can be a user-defined watermark or a watermark in a system watermark library) can be manually added to the photographed image through a user watermark selection instruction, thereby obtaining the photo to be printed with the watermark information, so as to satisfy the user's demand for the watermark information.

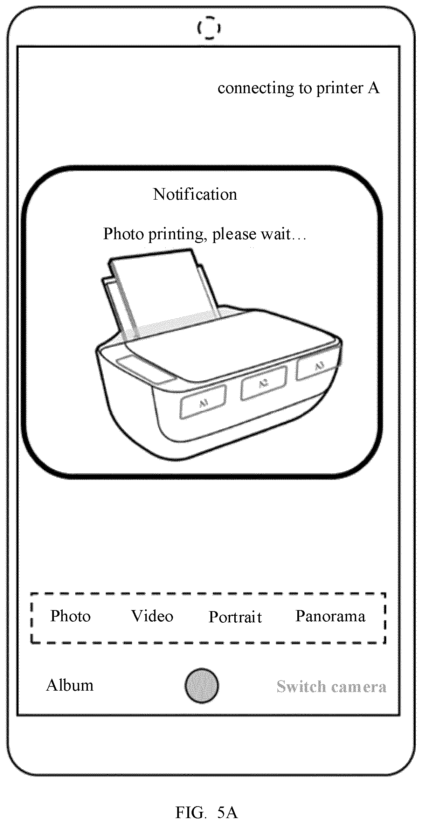

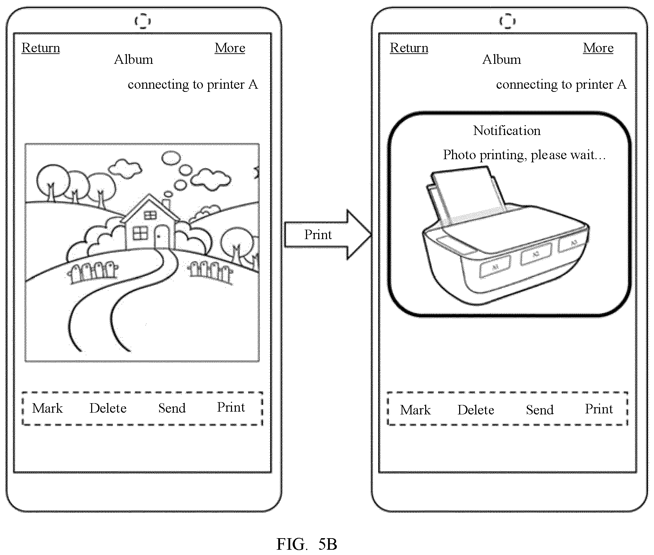

Through the above embodiments, the final photo to be printed for printing can be obtained. It can be seen from the relevant description of the above embodiments that the photo to be printed is divided into two types according to the determination method: 1) taking the photographed image as the photo to be printed; 2) selecting the target image in the image library as the photo to be printed. Therefore, different photos to be printed can be printed in different manners. For ease of understanding, the following embodiment will describe the printing of the photo to be printed through FIGS. 5A and 5B.

FIG. 5A shows a schematic diagram of printing a photographed image as a photo to be printed according to an embodiment of the present invention. As shown in FIG. 5A, following FIG. 2A and FIG. 3B and the related embodiments, after the shooting is completed, the photographed image is automatically sent to the printer for printing (for example, the shooting interface is still in progress, but the printing has been triggered and a related notification is displayed to the user).

FIG. 5B shows a schematic diagram of selecting a target photo in an image library as a photo to be printed for printing according to an embodiment of the present invention. As shown in FIG. 5B, following FIG. 2A and FIG. 3B and the related embodiments, after the shooting is completed, the user selects an image that the user wants to print from multiple images (e.g., images that have been photographed) in the album, sends it to the printer, and displays the relevant notification of printing to the user. It can be known that the image library can be, for example, the album. The user can enter it by clicking the "Album" button on the interface in the embodiments related to FIG. 2A or FIG. 2B.

Based on this, the user can determine the photo to be printed through different operation modes to meet different photo printing needs of the user.

After the terminal obtains the photographed image, the terminal can prompt the user of a photo printing state through the display interface.

In some embodiments, a second interface is displayed, and the second interface displays the photographed image and prompt information, the prompt information is configured to prompt the photo printing state.

For example, for the display of the second interface, the second interface may be displayed after jumping from the first interface to the second interface.

For another example, for the display of the prompt information, when the printing device is printing the photo, first prompt information may be displayed on the second interface; or when the printing device has completed printing the photo, second prompt information may be displayed on the second interface, and the second prompt information includes position information, and the position information is configured to indicate a photo retrieval position of the printing device corresponding to the printed image.

In some embodiments, the second interface may include a target control. In the case of including the target control, in response to acquiring a control instruction, the printing device may be controlled based on the target control to print the photographed image.

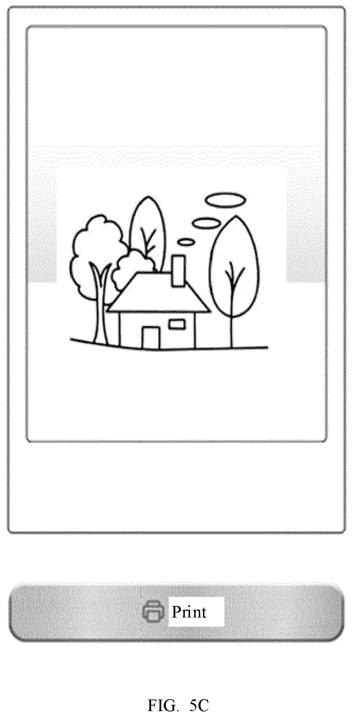

For the terminal to jump to display the photographed image, it can be shown in FIG. 5C. FIG. 5C shows a schematic diagram of displaying a second interface according to an embodiment of the present invention. The interface shown in FIG. 5C has jumped from the first interface to the second interface, and the second interface displays the photographed image.

Furthermore, in some embodiments, the photo printing state may be prompted by displaying different prompt information, and the prompt information may also be presented in the form of text (such as the relevant content described in FIG. 5B), voice, image, animation, etc.

In some embodiments, when the printing device is printing the photo, the first prompt information is displayed, or when the printing device completes printing the photo, the second prompt information is displayed.

For example, following the relevant embodiment of FIG. 5C, the photo printing state can be prompted through corresponding prompt information on the second interface. For example, a color gradient area shown in FIG. 5C can be understood as a "scanning animation", and the "scanning animation" is one of the presentation form of the prompt information.

For example, in the case of photo printing, the "scanning animation" may be scanning from one side of the second interface to the other side (e.g., scanning from the top of the terminal to the bottom of the terminal, etc.).

For another example, in the case of photo printing, the "scanning animation" may be the photographed image moving from one side of the terminal to the other side (e.g., gradually moving from the top of the terminal to the center of the display screen of the terminal, etc.).

In some embodiments, in response to the printing device completing the photo printing, the first interface is jumped to and the preview image is displayed on the first interface.

In some embodiments, in response to the printing device completing the photo printing, the first interface is displayed.

In some embodiments, the preview image displayed after jumping to a camera preview interface may be the preview image before jumping to the printing interface, or may be another preview image.

For example, after shooting for the first time, the terminal sends the photographed image to the printing device for printing. During this period, the terminal does not need to maintain the shooting position unchanged. If the shooting position changes, the preview image displayed on the camera preview interface that jumps again after printing may be different from the preview image when the photographed image is acquired.

Based on this, the interface change during the photo printing can be determined, and the user can determine the photo printing state according to the interface change or the displayed prompt information.

However, it can be known that since a printer usually has multiple print outlets (e.g., three retrieval positions A1, A2, and A3 indicated in the printer icon in FIG. 5A and FIG. 5B), in order to enable the user to accurately take the printed photo and to increase the interaction between the terminal and the user, the user can be informed of the photo retrieval position through the position information included in the prompt information after printing is completed.

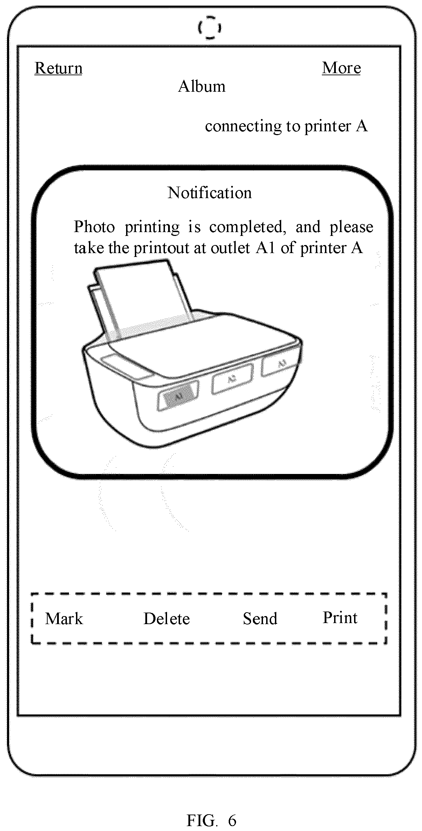

For example, in some embodiments, after the photo printing is completed, the method further includes: displaying position information on the display interface of the terminal, and the position information is configured to indicate a photo retrieval position of the printing device corresponding to the printed photo. For ease of understanding, the relevant description is given in the following embodiment in details with reference to FIG. 6.

FIG. 6 shows a schematic diagram of a photo retrieval position according to an embodiment of the present invention. As shown in FIG. 6, following the description of the embodiment related to FIG. 5B, after the photo printing is completed, a display area corresponding to A1 in FIG. 6 on the terminal screen will change color (such as a dark block in the figure), thereby notifying the user that the printed photo can be taken from at the outlet A1. In addition, relevant information such as "the image is printed, please take the printout from the outlet A1 of the printer A" can be added to the notification.

Based on this, the user can complete the photo printing through the terminal, thereby meeting the user need for photo printing.

Based on the same concept, embodiments of the present invention further provide a photographing device.

It should be understood that to implement the above-mentioned functions, the device for photographing the image provided by embodiments of the present invention includes hardware structures and/or software modules for implementing various functions. In combination with units and algorithm steps of examples disclosed in embodiments of the present invention, embodiments of the present invention can be implemented in the form of hardware or a combination of hardware and computer software. Whether a certain function is executed by hardware or computer software-driven hardware depends on the specific application and design constraint conditions of technical solutions. Those skilled in the art can use different manners for each specific application to implement the described functions, and such implementation should not be considered as going beyond the scope of technical solutions of embodiments of the present invention.

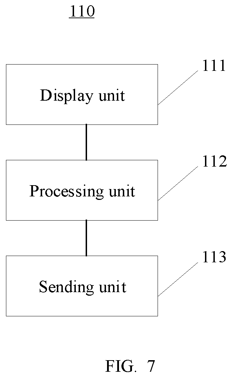

FIG. 7 shows a block diagram of a photographing device 110 according to an embodiment of the present invention. Referring to FIG. 7, the device 110 includes a display unit 111, a processing unit 112, and a sending unit 113.

The display unit 111 is configured to, in a case where a terminal is in a connected state with a printing device and a camera application of the terminal is launched, display a first interface in a first shooting mode, the first interface includes a viewfinder area and a control area, the viewfinder area is configured to display a preview image, the control area is configured to display a first shooting mode control identifying the first shooting mode, and the first shooting mode is active in the connected state.

The processing unit 112 is configured to, in response to acquiring a photographing instruction, photograph an object to be photographed in the preview image to obtain a photographed image.

The sending unit 113 is configured to send the photographed image to the printing device, and the photographed image is an image for photo printing by the printing device.

In some embodiments, the display unit 111 is further configured to display a second interface, the second interface is configured to display the photographed image and prompt information, and the prompt information is configured to prompt a photo printing state.

In some embodiments, the second interface includes a target control, and the display unit 111 is further configured to, in a case where a control instruction is acquired, control, based on the target control, the printing device to print the photographed image.

In some embodiments, the prompt information is displayed on the second interface in the following manner, including: in a case where the printing device is printing a photo, displaying first prompt information on the second interface; or in a case where the printing device has completed photo printing, displaying second prompt information on the second interface, the second prompt information includes position information, and the position information is configured to indicate a photo retrieval position of the printing device corresponding to the printed image.

In some embodiments, the display unit 111 is further configured to, in a case where the printing device completes photo printing, display the first interface.

In some embodiments, the processing unit 112 is configured to photograph the object to be photographed in the preview image in the following manner to obtain the photographed image: photographing the object to be photographed in the preview image to obtain a first photographed image; adding a target watermark to the first photographed image to obtain a second photographed image with the watermark, and using the second photographed image as the photographed image sent to the printing device, the target watermark is a watermark set based on a watermark operation instruction.

In some embodiments, a connection between the terminal and the printing device is established in at least one of the following manners: the connection between the terminal and the printing device being established based on a connection component; or the connection between the terminal and the printing device being established based on a wireless communication mode.

In some embodiments, in a case where the control area is configured to display a plurality of shooting mode controls, the display unit 111 is further configured to: in a case where a shooting mode switching instruction is acquired, switch from the first shooting mode control to a second shooting mode control, and display an interface in a second shooting mode, and the second shooting mode is a mode in which photo printing is disabled.

In some embodiments, in a case where the terminal includes a first screen portion and a second screen portion, and the first screen portion is foldable, the display unit 111 is configured to display the first interface in the first shooting mode in the following manner: in a case where the first screen portion is in a folded state, control the second screen portion to display the first interface; and in a case where the first screen portion is in an unfolded state, control the first screen portion to display the first interface, and/or control the second screen portion to display the first interface.

In some embodiments, the processing unit 112 is further configured to: in a case where the first screen portion is in the folded state, acquiring the preview image based on a first camera; and in a case where the first screen portion is switched from the folded state to the unfolded state, acquire the preview image based on a second camera, the first camera is a camera provided on a back side of the first screen portion, and the second camera is a camera provided on a display surface of the second screen portion.

Regarding the device in the above embodiments, the specific manner in which each module performs operations has been described in detail in the embodiments of the method, and will not be elaborated here.

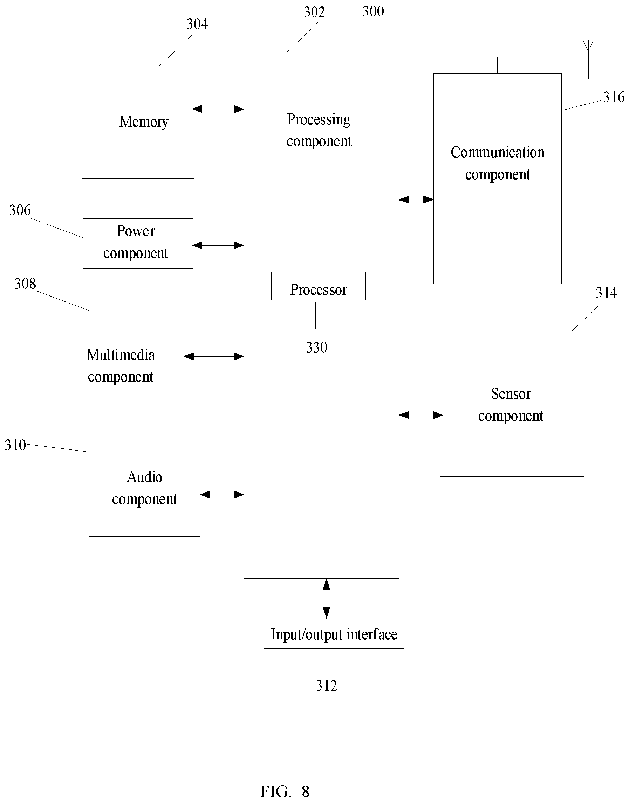

FIG. 8 shows a block diagram of a device 300 for photographing an image according to an embodiment of the present invention. For example, the device 300 may be a mobile phone, a computer, a digital broadcast terminal, a messaging device, a gaming console, a tablet device, a medical device, an exercise device, a personal digital assistant, etc.

Referring to FIG. 8, the device 300 for photographing the image may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 330 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and the rear camera may receive an external multimedia datum while the device 300 is in an operation mode, such as a shooting mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide state assessments of various aspects of the device 300. For instance, the sensor component 314 may detect an open/closed state of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 may access a wireless network based on a communication standard, such as WiFi, 2G, or 3G, or a combination thereof. In an embodiment, the communication component 316 receives a broadcast signal or broadcast associated information from an external broadcast management system via a broadcast channel. In an embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present invention, the device 300 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present invention, there is further provided a non-transitory computer readable storage medium including instructions, such as the memory 304 including instructions, the above instructions may be executed by the processor 330 in the device 300 for performing the above-described methods. For example, the non-transitory computer-readable storage medium may be a ROM, a Random Access Memory (RAM), a CD-ROM, a magnetic tape, a floppy disc, an optical data storage device, and the like.

FIG. 9 shows a block diagram of a device 400 for photographing an image according to an embodiment of the present invention. For example, the device 400 may be provided as a server. Referring to FIG. 9, the device 400 includes a processing component 422, which further includes one or more processors and a memory resource represented by a memory 432 for storing instructions executable by the processing component 422, such as an application program. The application program stored in the memory 432 may include one or more modules, each corresponding to a set of instructions. In addition, the processing component 422 is configured to execute the instructions to execute the aforementioned method.

The device 400 may further include: a power component 426 configured to perform power management of the device 400, a wired or wireless network interface 450 configured to connect the device 400 to the network, and an input/output (I/O) interface 458. The device 400 may operate an operating system stored in the memory 432, such as Windows Server TM, Mac OS XTM, UnixTM, LinuxTM, FreeBSDTM, or the like.

It should be understood that "plurality" or "multiple" mentioned in the present invention may refer to two or more, and other quantifiers are similar. The term "and/or" may describe association relationships of associated objects, indicating that there may be three types of relationships, for example, A and/or B may mean: A exists alone, A and B exist at the same time, and B exists alone. The character "/" generally indicates that the associated objects before and after are in an "or" relationship. It can be further understood that in the present invention, the singular forms of "a", "said" and "the" are also intended to include plural forms, unless the context clearly indicates other meanings.

It should be understood that although the terms first, second, and the like may be used to describe various information, the information should not be limited to these terms. These terms are only used to distinguish the same type of information from each other, and do not indicate a specific order or degree of importance. In fact, expressions such as first and second can be used interchangeably. For example, without departing from the scope of the present invention as defined by the claims, the first information may also be referred to as second information, and similarly, the second information may also be referred to as first information.

It can be further understood that an orientation or position relationship indicated by the terms "center", "longitudinal", "lateral", "front", "back", "up", "down", "left", "right", "vertical", "horizontal", "top", "bottom", "inside", "outside", etc. is based on an orientation or position relationship shown in the accompanying drawings, and is only for the convenience of describing the embodiment of the present invention and simplifying the description, and do not indicate or imply that the device or element referred to must have a specific orientation, be constructed and operated in a specific orientation.

It can be further understood that, unless otherwise specified, "connected" includes a direct connection between two without other components, and also includes an indirect connection between two with other elements.

It is further understandable that although the operations in embodiments of the present invention are described in a specific order in the drawings, they should not be understood as requiring these operations to be performed in the specific order shown or in a serial order, or requiring to perform all the operations shown to obtain the desired result. In certain circumstances, multitasking and parallel processing may be advantageous.

## Claims

1. A photographing method, comprising:
displaying (S11) a first interface (204) in a first shooting mode, in a case where a terminal (201) is in a connected state with a printing device (A) and a camera (202) application of the terminal is launched, wherein the first interface comprises a viewfinder area and a control area, the viewfinder area is configured to display a preview image, the control area is configured to display a first shooting mode control identifying the first shooting mode, and the first shooting mode is active in the connected state;
in response to acquiring a photographing instruction, photographing (S12) an object to be photographed in the preview image to obtain a photographed image; and
sending (S13) the photographed image to the printing device, wherein the photographed image is an image for photo printing by the printing device.

2. The method according to claim 1, wherein the method further comprises:
displaying a second interface, wherein the second interface is configured to display the photographed image and prompt information, and the prompt information is configured to prompt a photo printing state.

3. The method according to claim 2, wherein the second interface comprises a target control, and the method further comprises:
in response to acquiring a control instruction, controlling, based on the target control, the printing device to print the photographed image.

4. The method according to claim 2 or 3, wherein the prompt information is displayed on the second interface in the following manner, comprising:
in a case where the printing device is printing a photo, displaying first prompt information on the second interface; or
in a case where the printing device has completed photo printing, displaying second prompt information on the second interface, wherein the second prompt information comprises position information, and the position information is configured to indicate a photo retrieval position of the printing device corresponding to the printed image.

5. The method according to claim 2, 3 or 4, wherein the method further comprises:
in response to the printing device completing photo printing, displaying the first interface.

6. The method according to claim according to any of claim 1-5, wherein photographing the preview image to obtain the photographed image comprises:
photographing the object to be photographed in the preview image to obtain a first photographed image;
adding a target watermark to the first photographed image to obtain a second photographed image with the watermark, and using the second photographed image as the photographed image sent to the printing device, wherein the target watermark is a watermark set based on a watermark operation instruction.

7. The method according to claim according to any of claim 1-6, wherein a connection between the terminal (201) and the printing device (A) is established in at least one of the following manners:
the connection between the terminal and the printing device being established based on a connection component; or
the connection between the terminal and the printing device being established based on a wireless communication mode.

8. The method according to claim according to any of claim 1-7, wherein the control area is configured to display a plurality of shooting mode controls, and the method further comprises:
in response to acquiring a shooting mode switching instruction, switching from the first shooting mode control to a second shooting mode control, and displaying an interface in a second shooting mode, wherein the second shooting mode is a mode in which photo printing is disabled.

9. The method according to claim according to any of claim 1-8, wherein the terminal comprises a first screen portion (211) and a second screen portion (212), and the first screen portion is foldable;
displaying the first interface in the first shooting mode comprises:
in response to the first screen portion being in a folded state, controlling (S22) the second screen portion to display the first interface; and
in response to the first screen portion being in an unfolded state, controlling (S23) the first screen portion to display the first interface, and/or controlling the second screen portion to display the first interface.

10. The method according to claim 9, wherein the method further comprises:
in a case where the first screen portion is in the folded state, acquiring the preview image based on a first camera (202); and
in response to switching the first screen portion from the folded state to the unfolded state, acquiring the preview image based on a second camera (207), wherein the first camera is a camera provided on a back side of the first screen portion, and the second camera is a camera provided on a display surface of the second screen portion.

11. The method according to any of claim 1-10, wherein when the terminal (201) is in the connected state with the printing device and the camera application is launched, the first shooting mode control is in an operable state to enable a user to select the first shooting mode through the first shooting mode control.

12. The method according to any of claim 1-11, wherein when the terminal is not in the connected state with the printing device, the first shooting mode control is displayed in the control area and is in an inoperable state;
optionally, wherein when the terminal is not in the connected state with the printing device, prompt information is display in the terminal if the first shooting mode control is clicked by a user.

13. The method according to any of claim 1-11, wherein when the terminal is not in the connected state with the printing device, the first shooting mode control is not displayed.

14. An electronic device, comprising:
a processor (302); and
a memory (304), configured to store executable instructions of the processor;
wherein the processor is configured to execute the photographing method according to any one of claims 1 to 13.

15. A storage medium having instructions stored thereon, wherein the instructions in the storage medium, when executed by a processor of a terminal, enable the terminal to execute the photographing method according to any one of claims 1 to 13.
